# EUROPEAN PATENT APPLICATION

(11) **EP 1 826 581 A1**
(43) Date of publication of application: **29.08.2007**
(21) Application number: 05816659.6
(22) Date of filing: 19.12.2005
(51) Int. Cl.: G01R 33/02

(54) **DATA ERASURE CONFIRMATION INDICATOR, RECORDING MEDIUM PROCESSING BOX, AND DATA ERASING METHOD**

(30) Priority: 24.12.2004 JP 2004373581
(71) Applicant: Orient Instrument Computer Co., Ltd, Osaka-shi, Osaka 536-0014 (JP)
(72) Inventor: ITO, Tomoaki ORIENT INSTRUMENT COMPUTER CO., LTD, Chuo-ku, Osaka-shi, 540-6035 (JP)
(74) Representative: Paul, Dieter-Alfred
(86) International application number: PCT/JP2005/023283
(87) International publication number: WO 2006/068098

(57) **Abstract**

There is provided with an indicator 1 for confirming data erasure to be placed in a magnetic field with a recording medium in placing the recording medium in the magnetic field so as to erase data recorded in the medium, including a displaying part 2 whose displaying status changes upon being placed in a magnetic field of a predetermined strength or more. The indicator 1 mainly consists of a transparent film layer 5, a core layer 6, and a magnetic body layer 7, which are adhesively bonded. The core layer 6 has a cavity 11 encapsulating magnetic particles 12. The magnetic particles 12 freely move within the cavity 11.

## Description

### BACKGROUND OF THE INVENTION

### FIELD OF THE INVENTION

The present invention relates to an indicator for confirming data erasure for use in erasing recorded data from magnetic recording media such as a hard disk drive, a floppy disk (FD, registered trademark), or a video tape or recording media such as an MO employing a recording method using magnetism together.

### DESCRIPTION OF THE RELATED ART

Even when a hard disk drive incorporated in a computer undergoes formatting (physical formatting and logical formatting) of its magnetic disks by an OS (Operation System), only information such as location information (FAT: File Allocation Table) of recorded data are erased and magnetic data recorded on the magnetic disks themselves are not erased. Therefore, when a computer is to be reused or discarded, for example, in view of protecting the magnetic data from being read out by others, such security measures as making it impossible to restore the data by means of software such as a data erasing software or mechanically destroying the hard disk drive itself are taken.

However, a data erasing software for precluding possible data restore is designed to write predetermined data such as random data or "00" over the magnetic disks to avoid data restore, resulting in requiring a lot of time to overwrite the data. Mechanical destruction of the hard disk drive also takes effort to destroy it, and further, makes it impossible to reuse the hard disk drive. Still further, some data can be read out from a piece of the destroyed magnetic disks.

Thus, a data eraser for erasing magnetic data in a short period of time without overwriting data or destroying a hard disk drive has been developed. The patent document 1, for example, discloses a recorded data eraser that makes it impossible to restore recorded magnetic data by applying a magnetic field from outside of the hard disk drive to disrupt the magnetic data recorded on magnetic disks. According to the recorded data eraser disclosed in the patent document 1, it is only necessary to insert a hard disk drive into the eraser and to carry out a data erasing operation, thereby erasing recorded magnetic data in a short period of time. Thus, the hard disk drive whose data have been erased can be discarded or reused as installing again in a computer.
Patent Document 1: Japanese Utility Model Registration No. 3088608

### SUMMARY OF THE INVENTION

### PROBLEMS TO BE SOLVED BY THE INVENTION

The above-mentioned data eraser generates a strong magnetic field, in which a recording medium is placed, so as to erase recorded data. The recording medium itself is not destroyed, so that the medium is reused.

However, according to a method for erasing recorded data by exposing a recording medium to such a strong magnetic field as described above, a practitioner might suspect the credibility of data erasure. Specifically, the above-mentioned method exposes a recording medium to a strong magnetic field so as to destroy data, making no change to the medium in appearance at all. Further, even with exposure to a strong magnetic field, the magnetic field itself is not checked with human eyes. More specifically, according to a data erasing operation by the above-mentioned data eraser, a recording medium has no change in appearance before and after the operation and its erasing processes cannot be checked with human eyes.

Thus, a practitioner who carries out the data erasing operation is not sure whether the data is really destroyed or not and feels anxious.

The present invention is intended to eliminate problems or anxieties in the art described above, and provides an indicator adapted to infer that data is erased.

### MEANS TO SOLVE THE PROBLEMS

An aspect of the present invention to solve the problem described above is an indicator for confirming data erasure to be placed in a magnetic field with a recording medium in placing the recording medium in the magnetic field so as to erase data recorded in the medium, including a displaying part, wherein the displaying part causes its displaying status to change upon being placed in a magnetic field of a predetermined strength or more.

The indicator of the present aspect is used by being inserted into a data eraser generating a magnetic field with a recording medium whose data is to be erased. In other words, the indicator of the present aspect is positioned adjacent to a recording medium whose data is to be erased in a data erasing operation.

The indicator causes its displaying status to change upon being placed in a magnetic field of a predetermined strength or more, so that change of the display of the displaying part before and after the data erasing operation means that the indicator has been exposed to the magnetic field. As described above, since the indicator has been positioned adjacent to the medium, it is inferred that the medium adjacent to the indicator has been also exposed to the respectable magnetic field and that the data has been destroyed if and when exposure of the indicator to the magnetic field is proved by the change of the displaying part of the indicator.

In the indicator of the present aspect, the displaying status of the indicator preferably changes in at least one of the following ways that: (1) at least one of predetermined letter, figure, mark, pattern, and color is displayed in advance and the at least one of them is disappeared when the indicator is placed in the magnetic field of the predetermined strength or more; (2) at least one of predetermined letter, figure, mark, pattern, and color appears when the indicator is placed in the magnetic field of the predetermined strength or more; and (3) at least one of predetermined letter, figure, mark, pattern, and color is displayed in advance and the at least one of them changes.

In the indicator of the present aspect, it is preferable that the displaying part includes a magnetic body layer and a magnetic particle layer arranging therein magnetic particles and allowing the magnetic particles to freely move in at least some part of the magnetic particle layer, so that arrangement of the magnetic particles being visible from outside.

Such an indicator displays a letter or a figure by means of a predetermined magnetic head. Specifically, the magnetic head magnetizes the magnetic body layer in a predetermined pattern. For example, the magnetic body layer is magnetized so as to have a magnetized portion composed of lines and/or curves that indicate a predetermined number or letter.

Further, the indicator of the present aspect has the magnetic particle layer having the magnetic particles arranged movably, so that the magnetic particles are aligned along the magnetized linear groups and indicate the predetermined number or letter.

When the indicator of the present aspect is placed within a magnetic field of a predetermined strength, the magnetized pattern on the magnetic body layer is disrupted, resulting in disappearing of the original character.

The magnetic particle layer may allow the magnetic particles to freely move in some part of the magnetic particle layer, but preferably in a substantially entire area of the magnetic particle layer.

It is suitable, for example, that the indicator has a transparent layer, so as to form a closed cavity covered with the transparent layer, the magnetic particles being encapsulated in the cavity and being movable freely in an entire area of the cavity.

Further, in the indicator of the present aspect, the magnetic particle layer may have a plurality of microcapsules, the magnetic particles being encapsulated in each of the microcapsules, so as to freely move only in the each microcapsule.

The displaying part may be shaped into a plate and mainly constituted by a magnetic body layer and a magnetic particle layer made of a synthetic resin having a number of microcapsules dispersed therewithin and being arranged on one side of the magnetic body layer.

The microcapsules may encapsulate a liquid and the magnetic particles suspended in the liquid and reactable to the magnetic field.

In the indicator of the present aspect, the magnetic body layer may have a particular part, so that a predetermined letter or graphic pattern is presented by the part when the particular part is magnetized. Further, the magnetic body layer may have a magnetized particular part, so that a predetermined letter or graphic pattern is drawn by the magnetized part.

The use of the former indicator, which is an indicator not having been magnetized yet, allows users to draw a letter or a graphic pattern for different purposes of use of users themselves by magnetization.

The use of the latter indicator, whose particular part has been already magnetized, allows users to select and use an indicator in which a letter or a graphic pattern has been already drawn by magnetization in response to different purposes of use, thereby simplifying handling by the users.

In such the indicator as described above, it is preferable that the magnetic body layer is magnetized by a magnetic field of about 30 to 50 % weaker than the magnetic field generated by the data eraser in erasing data.

Further, it is easy to use the indicator, if the indicator is flat. Especially, the indicator is preferably of a card-shape. Being of a card-shape, the indicator is insertable into a small place, requiring little space.

The indicator of the present aspect may be of a tape-shape, and include a plurality of displaying parts, the parts being adapted to be separated into every displaying part. This configuration makes it easy to keep and use the indicator.

It is recommended that the indicator of the present aspect further includes a first surface and a second surface, the first surface being for checking with human eyes, and the second surface having an adhesive layer. According to such a configuration, the adhesive layer bonds the indicator to a recording medium or a box (described below) for use in processing recording media. Especially, in the case that the indicator is flat like a card or a tape, the adhesive layer formed on the second surface (rear side) makes it easy to use the indicator.

It is preferable that a display of the displaying part changes under the condition that the indicator is placed in a magnetic field of a maximum strength of 120 kA/m or more.

The "maximum strength" herein denotes the maximum strength in a magnetic field varying with time. Experiments by the present inventor revealed that the maximum strength required for irretrievably erasing and destroying data recorded in a recording medium depends on conditions such as a structure and a type of the medium, but is generally about 120 kA/m (about 1500 oersted) or more. The indicator of the present modification is based on such the fact, so as to allow the display of the displaying part to change under the condition that the indicator is placed in the magnetic field of the maximum strength of 120 kA/m or more.

Another aspect of the present invention is a box for use in processing recording media, being accompanied with any of the indicator for confirming data erasure as described above mounted on a surface of the box, and being adapted to accommodate a plurality of recording media therein.

The box of the present aspect is used is such a manner as containing a plurality of recording media therein and being exposed to a magnetic field in whole. According to the box of the present aspect, it is inferred from visual confirmation of change of the displaying part of the indicator mounted on the surface thereof that data of the recording media in the box is destroyed.

The indicator may be mounted on the surface of the box by only placing the indicator on the box, but the indicator is preferably secured to the box in some way in view of positional stability of the indicator. The indicator may be secured to the box by pasting just before the data erasing operation, but attachment of the indicator integrally to the surface of the box in advance achieves the prevention of forgetting to mount the indicator thereon and the saving of time for a data erasing operator.

Still another aspect of the present invention is a method for erasing data, including the step of placing a recording medium and any indicator for confirming data erasure as described above in an attenuating alternating magnetic field whose peak value reduces as time passes.

The "attenuating alternating magnetic field" in the present invention denotes a magnetic field whose magnetic flux density reduces with alternately reversing its polarity.

The method of the present aspect is embodied by further including the steps of providing a data eraser including a containing part, a magnetic field generating part adapted to generate the attenuating alternating magnetic field within the containing part, and an outer casing for covering the containing part from outside, and placing the recording medium and the indicator in the containing part.

Through each aspect of the present invention, the recording media are typified by a hard disk drive. The hard disk drive denotes a device incorporating a solid magnetic disk for recording magnetic data. The recording media also conceptually include small or large magnetic tapes for use in a general-purpose computer or video tapes used at home.

The recording medium may be placed in an attenuating alternating magnetic field in a discretionary manner. A device such as the above-mentioned hard disk drive may be individually placed in the magnetic field one at a time or a container such as a box containing therein a plurality of recording media may be placed in the magnetic field. Further, the attenuating alternating magnetic field may be applied to a device such as a computer incorporating a recording medium such as a hard disk drive with the recording medium kept incorporated. Specifically, the magnetic field may be applied from outside to a hard disk drive without being detached from and with kept incorporated in a device such as a computer.

Generally, a rapid application of a magnetic field around a magnetic body magnetizes the magnetic body in a predetermined strength. Further, arrangement of a magnetized magnetic body in a magnetic field and gradual reducing of strength of the magnetic field to zero or gradual separation of the magnetized magnetic body from the magnetic field demagnetize the body. Such a demagnetization characteristic has also been applied to a device such as a head eraser of a magnetic head for use in a tape recorder or a video recorder.

The method of the present embodiment is designed to use such the demagnetization characteristic. Further, in the present aspect, a recording media and any indicator described above are placed in the above-mentioned attenuating alternating magnetic filed. Thus, it is possible to confirm erasure of data of the recording medium by the indicator.

In the method of the present aspect, the indicator can be mounted on the recording medium in a visible way when the recording medium and the indicator are placed in the attenuating alternating magnetic field.

Herein, the indicator may be mounted on the recording medium in a visible way by only placing the indicator on the box, but the indicator is preferably pasted on the medium by an adhesive means such as an adhesive tape in view of positional stability of the indicator.

The method of the present aspect preferably includes the step of magnetizing a magnetic body layer of the indicator by a magnetic field of about 30 to 50 % weaker than the magnetic field generated by a data eraser before placing of the indicator in the magnetic field generated by the data eraser.

### ADVANTAGEOUS EFFECT OF THE INVENTION

The indicator for confirming data erasure of the present invention causes the displaying part to change on exposure to a magnetic field, thereby confirming whether a recording medium is exposed to a magnetic field of a predetermined strength if being used with the medium. Thus, it is possible to infer that data is destroyed with human eyes and to cast aside the anxiety of a practitioner of the data erasing operation.

The use of the box for use in processing recording media of the present invention has an effect of enabling data erasure of a plurality of recording media at once. Further, processing status of the recording media contained in the box is checked by means of the indicator for confirming data erasure.

The method for erasing data of the present invention has an effect of ensuring destruction of data of a recording medium in a short period time.

### BRIEF DESCRIPTION OF THE DRAWINGS

Fig. 1 is a perspective view of an indicator for confirming data erasure embodying the present invention;
Fig. 2 is an exploded perspective view showing layers of the indicator shown in Fig. 1;
Fig. 3 is a cross section of a vicinity of a displaying part of the indicator shown in Fig. 1;
Fig. 4 is a basic circuit diagram of a data eraser employed in a method for erasing data of the present invention;
Fig. 5 is a graph showing strength of a magnetic field generated by the data eraser shown in Fig. 4;
Fig. 6 is an exploded perspective view showing a structure of the data eraser shown in Fig. 4;
Fig. 7 is a perspective view showing a state of the indicator of the embodiment of the present invention to be inserted into a data eraser;
Fig. 8 is a perspective view showing another state of the indicator of the embodiment of the present invention to be inserted into a data eraser;
Fig. 9 is an enlarged sectional perspective view of a vicinity of a displaying part of an indicator for confirming data erasure of the second embodiment of the present invention; and
Fig. 10 is a perspective view of an indicator for confirming data erasure of the third embodiment of the present intention.

### DESCRIPTION OF THE PREFERRED EMBODIMENTS

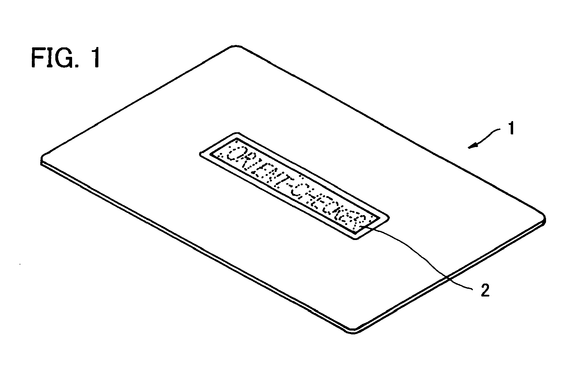

Now, preferred embodiments of the present invention will be described below, making reference to the accompanying drawings. As shown in Fig. 1, an indicator 1 for confirming data erasure (hereinafter referred to as an indicator) of the present embodiment is of a card-shape. The indicator 1 is of a rectangular thin plate, being the size and thickness of a business card. More specifically, the indicator 1 is a rectangle with a length of 7 to 9 cm, a width of approximately a half of the length, and a thickness of 0.2 to 0.8 mm around.

A displaying part 2 is formed in the center on one surface of the indicator 1. In the indicator 1 shown in the figure, the displaying part 2 has an area of about 10 % of that of the surface of the indicator 1, but may have a discretionary area, and may occupy the majority thereof.

The indicator 1 of the present embodiment is adapted to indicate a desired display on the displaying part 2 by means of a card writer having a magnetic head.

Now, an internal structure of the indicator 1 will be described below. The indicator 1 consists mainly of a transparent film layer 5, a core layer 6, and a magnetic body layer 7, which are adhesively bonded by adhesive layers not shown, respectively.

The transparent film layer 5 is made of a transparent resin film such as transparent PET (polyethylene terephthalate).

The core layer 6 is a plate-like support and made of a material such as various kinds of plastic such as polypropylene, polyethylene, polyethylene terephthalate, polyvinyl chloride, ABS (acrylonitrile-butadiene-styrene resin), PBT (polybutylene terephthalate), or POM (polyacetal), various kinds of metal, or various kinds of cardboard.

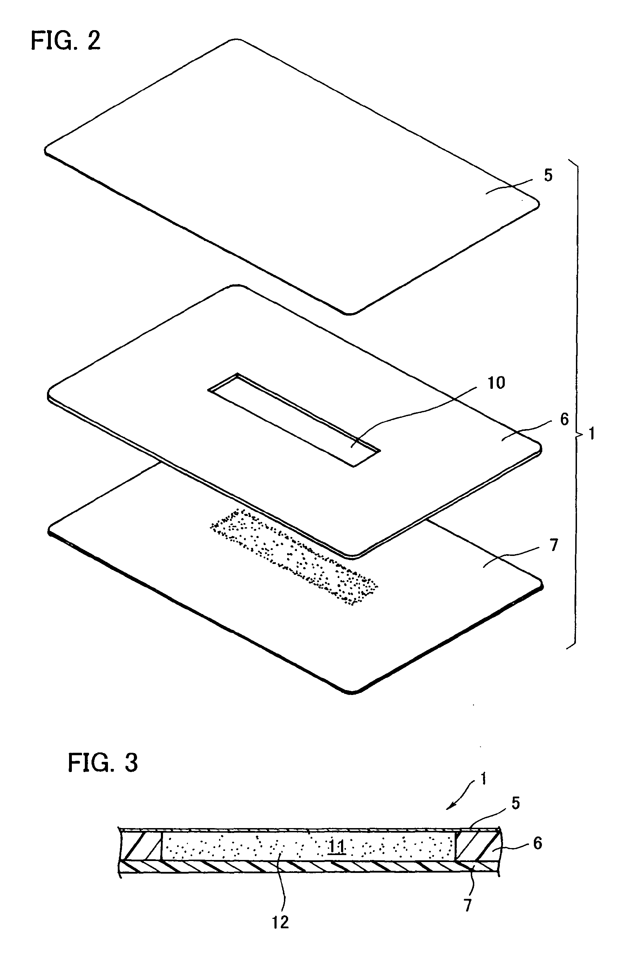

In the present embodiment, rigidity of the indicator 1 is substantially supported by the core layer 6. A plate body constituting the core layer 6 has a rectangular opening 10 in its center, as shown in Fig. 2.

The magnetic body layer 7 consists mainly of a base film (not shown) with a magnetic layer on at least one surface thereof. More specifically, a magnetic paint made by magnetic powder dissolved in a binder is applied to the base film so as to form the magnetic body layer 7. At this time, before the magnetic paint gets hard, a static magnetic field is applied thereto to align axes of easy magnetization of magnetic particles constituting the magnetic powder in a direction of the magnetic field, thereby obtaining a desired magnetic orientation.

The magnetic powder used for the magnetic body layer 7 is made of a material such as iron, nickel, aluminum-cobalt alloy, samarium-cobalt alloy, and stainless steel containing iron and nickel or iron, nickel, and chrome.

As shown in Figs. 2 and 3, the indicator 1 of the present embodiment has such a layered structure that the transparent film layer 5 is layered on one surface (front side) of the core layer 6 and the magnetic body film layer 7 is layered on the other surface (rear side) thereof with a center on the core layer 6. The both surfaces of the core layer 6 are entirely covered with the transparent film layer 5 and the magnetic body layer 7 described above, respectively. Thus, in the indicator 1 of the present embodiment, as shown in Fig. 3, a cavity 11 is formed at a portion corresponding to the opening 10 of the core layer 6. Specifically, the core layer 6 has the opening 10 that has two opening sides, one opening side (front side) being covered with the transparent film layer 5 and the other opening side (rear side) being covered with the magnetic body layer 7, so that a closed cavity is formed at the opening 10 of the core layer 6. In the present embodiment, a small amount of magnetic particles 12 is encapsulated in the cavity 11. The magnetic particles 12 each are made of a material such as iron, nickel, aluminum-cobalt alloy, samarium-cobalt alloy, and stainless steel containing iron and nickel or iron, nickel, and chrome. The magnetic particles 12 freely move within the cavity 11.

As described above, the front side of the cavity 11 (core layer 6) is covered with the transparent film layer 5, but the layer 5 is transparent, so that the cavity 11 is viewed from outside with human eyes. That is, the magnetic particles 12 within the cavity 11 are observed from outside.

According to the indicator 1 of the present embodiment, a character such as a letter or a number is displayed on the displaying part 2. Specifically, a magnetic head (not shown) is positioned close to the magnetic body layer 7 corresponding to the back of the displaying part 2 of the indicator 1 and moved relative to the indicator 1, for example, so as to magnetize a particular part of the magnetic body layer 7. A desired letter or graphic pattern is presented by the magnetized part.

That generates a number of micromagnets corresponding to the above-mentioned letter or pattern on the magnetic body layer 7. Leakage flux is generated by the micromagnets. The magnetic particles 12 within the cavity 11 are aligned along the leakage flux. Herein, as described above, the cavity 11 is viewed with human eyes. That is, the magnetic particles 12 within the cavity 11 are observed from outside, and thus, the magnetic particles 12 aligned along the magnetized letter or pattern are observed through the transparent film layer 5.

Disappearing of magnetism of the magnetic body layer 7 described above causes the display of the displaying part 2 to disappear. Specifically, as described above, the micromagnets have been generated by magnetization of the magnetic body layer 7 by the magnetic head, but magnetism of the magnetic body layer 7 disappears on exposure to a stronger magnetic field than that at the time of the magnetization, resulting in changes of the display on the displaying part 2.

The present invention makes use of such a characteristic to infer whether data of a recording medium is destroyed. The indicator 1 of the present embodiment is used by being inserted into a data eraser adapted to generate a magnetic field with a recording medium whose data is to be erased.

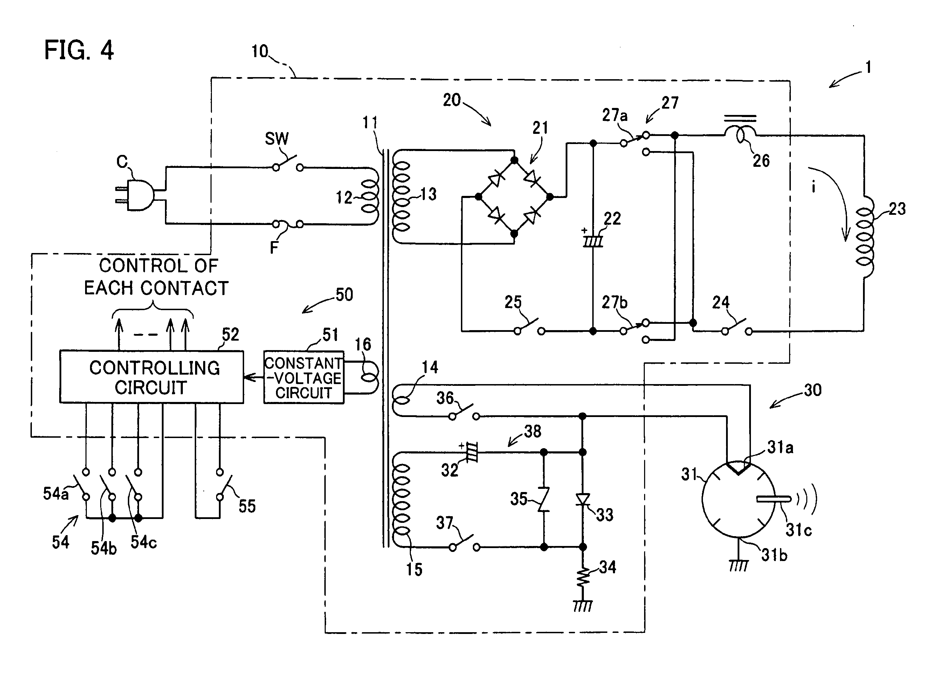

Now, an example of a data eraser adapted to generate a magnetic field will be briefly described below. Herein, a data eraser illustrated in the figures following Fig. 4 is adapted to generate not only a magnetic field but also a microwave, but a description about a configuration or an effect of generation of the microwave is omitted.

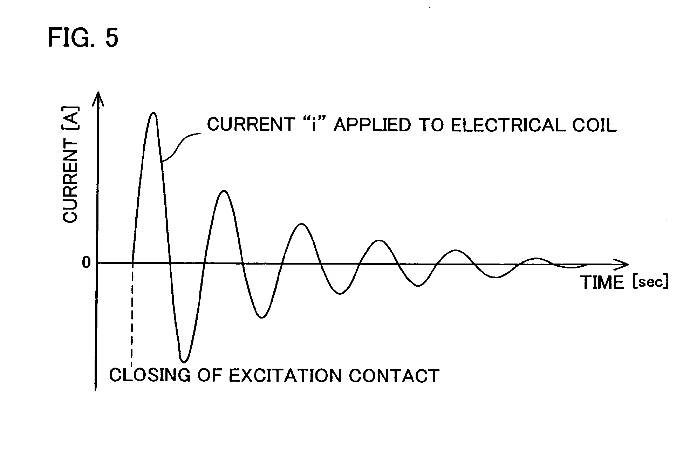

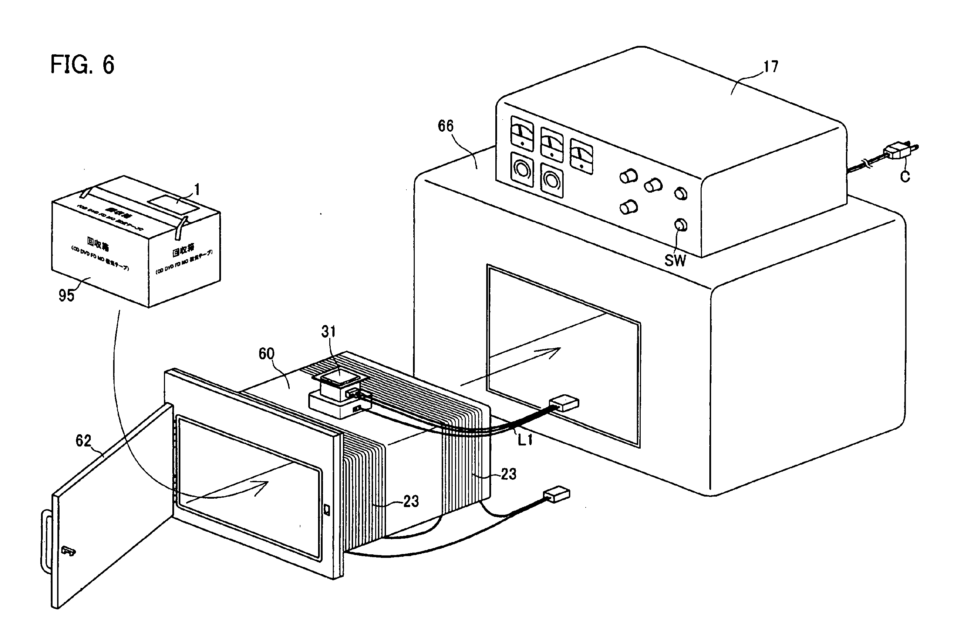

Fig. 4 is a basic circuit diagram of a data eraser employed in a method for erasing data of the present invention. Fig. 5 is a graph showing strength of a magnetic field generated by the data eraser shown in Fig. 4. Fig. 6 is an exploded perspective view showing a structure of the data eraser shown in Fig. 4.

Referring to Fig. 4, a data eraser roughly consists of a magnetic field generating part 20, an electromagnetic wave generating part (microwave generating part) 30, a controlling part 50, and a power transformer 34 for supplying AC power source to each part described above.

The power transformer 34, as shown in Fig. 4, generates AC power voltage required for each part upon reception of a commercial power source (AC 100V), including a primary wiring 35 connected to the commercial power source (AC 100V), a secondary wiring 13 connected to the magnetic field generating part 20, secondary wirings 14 and 15 connected to the electromagnetic wave generating part 30, and a secondary wiring 16 connected to the controlling part 50.

In the eraser in Fig. 4, the magnetic field generating part 20 is designed to discharge electricity charged in a capacitor 22 through an electrical coil 23, as shown in Fig. 5, thereby generating an attenuating alternating magnetic field. In the magnetic field generating part 20, the secondary wiring 13 of the power transformer 34 is connected to a bridge diode 21, and a rectified output from the bridge diode 21 is connected to the capacitor 22 through a charging contact 25. Both ends of the capacitor 22 are connected to a series circuit composed of a reactor 26, the coil 23, and an excitation contact 24 through a polarity reversing part 27.

In the present embodiment, a polarized electrolytic capacitor is employed as the capacitor 22. The reactor 26 serially connected to the coil 23 has a function of stabilization of electric current applied to the coil 23. The polarity reversing part 27 has contacts 27a and 27b switched in conjunction with each other, so that switching of the contacts 27a and 27b reverses electric current flowing from the capacitor 22 to the coil 23.

The magnetic field generating part 20 generates an attenuating alternating magnetic field by the following operation. First, the charging contact 25 is closed with the excitation contact 24 opened, so as to charge the capacitor 22. The capacitor 22 is charged until its charging voltage reaches a peak value of a full-wave rectified voltage by the bridge diode 21. Time duration required for charging is determined based on a capacitance of the capacitor 22 and a wiring resistance of the secondary wiring 13 of the power transformer 34.

Upon completion of charging of the capacitor 22, the charging contact 25 is opened. At this moment, the capacitor 22 is fully charged, so that its terminal voltage is substantially equal to the peak value of the full-wave rectified voltage by the bridge diode 21. Next, upon closing of the excitation contact 24, the electricity charged in the capacitor 22 is rapidly discharged through the coil 23. Herein, the capacitor 22 and the coil 23 are connected in series so as to form a series resonant circuit. Thus, upon closing of the excitation contact 24, as shown in Fig. 5, an attenuating alternating electric current "i" whose peak value reduces as time passes flows in the coil 23.

A cycle time of the attenuating alternating electric current "i" flowing in the coil 23 is generally determined based on a capacitance of the capacitor 22 and an inductance of the coil 23. An attenuation rate of the attenuating alternating electric current "i" is determined based on an internal resistance of the capacitor 22 or a resistance component of the coil 23. Specifically, when the excitation contact 24 is closed, as shown in Fig. 5, the attenuating alternating electric current "i" having the cycle time and the attenuation rate determined based on the series resonant circuit composed of the capacitor 22 and the coil 23 is applied to the coil 23, and the applied current is attenuated with reversal of its polarity, leading to zero.

Consequently, closing of the excitation contact 24 generates around the coil 23 an attenuating alternating magnetic field whose magnetic flux density gradually reduces with alternating of its magnetic pole as time passes. The magnetic field generating part 20 is adapted to generate an attenuating alternating magnetic field based on such a principle, and uses the generated attenuating alternating magnetic field, so as to erase magnetic data recorded in a magnetic data recording medium. More specifically, the magnetic field generating part 20 of the data eraser of the present embodiment is a circuit not for generating a strong magnetic field for a long period of time, but for generating an attenuating alternating magnetic field whose magnetic flux density reduces as time passes.

The mechanical structure of the data eraser of the present embodiment is as shown in Fig. 6. Specifically, the data eraser includes a containing part 60 and structural components of an outer casing 66 for covering the containing part 60 from outside.

The containing part 60, as shown in Fig. 6, is a square-shaped box having space inside and made of a nonmagnetic material, with its front side opened and the other sides (left, right, top, bottom, and back sides) closed. A magnetron (magnetic field generating part) 31 is secured to a center part of the top face of the containing part 60.

The coil 23 is wound around the outer wall of the containing part 60. A door 62 is attached to a side edge of the front side of the containing part 60. The outer casing 66 is a box made of a magnetic body larger than the containing part 60 with a part of its front side opened and the other sides (left, right, top, bottom, and back sides) closed, so as to accommodate the containing part 60.

A circuit housing 17 housing therein a circuit block 33 shown in Fig. 4 is mounted on the top of the outer casing 66.

A recording medium to be discarded is inserted into the containing part 60 of the above-mentioned data eraser so as to erase data, and the indicator 1 of the present embodiment is also contained in the containing part 60.

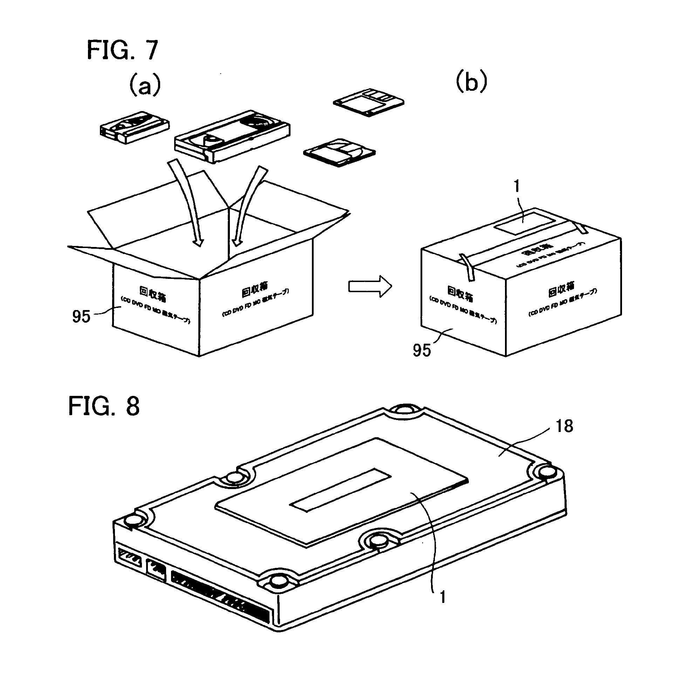

Figs. 7 and 8 each are a perspective view showing a state of the indicator 1 of the embodiment of the present invention to be inserted into the data eraser.

A recording medium may be contained in a discretional way. As shown in Figs. 6 and 7, for example, it is possible to contain a number of media such as hard disk drives or flexible disks in a box (box for use in processing recording media) 95, and then to insert the box 95 into the containing part 60 of the data eraser. At this time, the indicator 1 of the present embodiment may be placed on the top of the box 95 and inserted into the data eraser with the box 95. Further, the indicator 1 may be integrated with a surface of the box 95 in advance.

Further, as shown in Fig. 8, a hard disk drive 8 may be contained directly in the containing part 60. In this case, the indicator 1 is put on the hard disk drive 8 or pasted thereto with an adhesion tape.

Still further, a device incorporating a recording medium such as a computer incorporating a hard disk drive may be directly contained in the containing part 60. Also in this case, the indicator 1 is put on a housing of the computer or pasted thereto with an adhesion tape.

The displaying part 2 of the indicator 1 inserted into the data eraser is prepared in advance to display a character such as a letter by means of a card writer having a magnetic head. As shown in Fig. 1, for example, the term "ORIENT-CHECKER" is to be displayed.

Then, the above-mentioned data eraser is started, so as to apply an attenuating alternating magnetic field of a predetermined strength to the recording medium. That erases and destroys data in the medium. The indicator 1 is also exposed to the magnetic field as well as the medium. That also demagnetizes the indicator 1, so that the term "ORIENT-CHECKER" on the displaying part 2 disappears.

Upon completion of a predetermined data erasing operation, the medium is taken out of the data eraser. The medium having been taken out has no change in appearance before and after the operation, but the displaying part 2 of the indicator 1 enclosed in the containing part 60 shows a changed display. That leads to an inference that the similar magnetic force has acted on the medium placed adjacent thereto. Consequently, an operator or a user is confirmed in the belief that the data in the medium is erased.

The embodiment described above illustrates the indicator 1 having the magnetic particles 12 encapsulated in the cavity 11 formed in the core layer 6. The above-mentioned embodiment is designed so that each of the magnetic particles 12 freely moves within the entire area of the cavity 11. However, the present invention is not limited thereto, and for example, may also have such a structure that magnetic particles are encapsulated in a resin microcapsule so as to freely move only within the microcapsule.

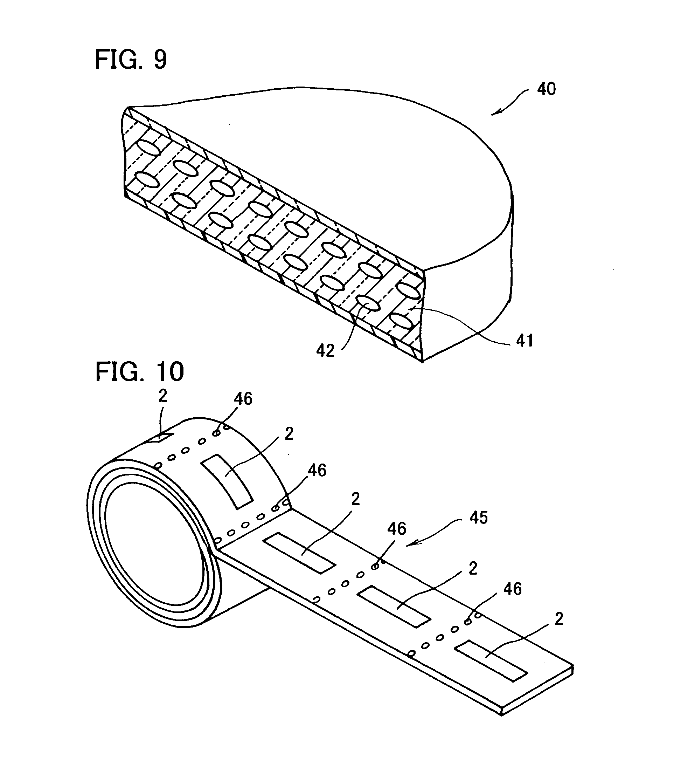

Fig. 9 is an enlarged sectional perspective view of a vicinity of a displaying part of an indicator for confirming data erasure of the second embodiment of the present invention.

In an indicator 40 shown in Fig. 9, a displaying part is shaped into a plate and mainly constituted by a magnetic body layer 43 and a magnetic particle layer made of a synthetic resin 41 having a number of microcapsules 42 dispersed therewithin and being arranged on one side of the magnetic body layer 43. The microcapsules 42 each encapsulate a liquid and the magnetic particles suspended in the liquid and reactable to a magnetic field. A transparent film layer 44 is arranged on the other side of the magnetic body layer 43. In short, in the indicator 40, the displaying part is constituted by the magnetic body layer 43, the magnetic particle layer, the transparent film layer 44 layered in this order. However, it is possible to dispense with the transparent film layer 44.

In the above-mentioned embodiments, the indicators each are of a card-shape, but may be of any shape. For example, as shown in Fig. 10, which is a perspective view of an indicator 45 for confirming data erasure of the third embodiment of the present intention, it is possible to form the indicator 45 being of a tape-shape and having a plurality (or a number) of displaying parts, the parts being adapted to be separated into every displaying part 2. Scissors or a knife may be used to separate into every displaying part 2 of the indicator 45, but as shown in Fig. 10, formation of a number of aligned small openings (viz. perforation) 46 in advance facilitates separation by ripping or splitting by a worker or a user. However, the small openings 46 are not necessary and a material or a thickness of the indicator 45 may be prepared enough to be separated by ripping or splitting by a worker or a user.

Further, it is recommended to form an adhesive layer on the back of the indicator 45 so as to bond the indicator 45 onto a recording media or the box for use in processing recording media.

A threshold of strength of a magnetic field required for changing the display of the indicator 1 (hereinafter referred to as "strength for change") is preferably set based on a magnetic filed generated by the data eraser. Specifically, the indicator 1 displays a character such as a letter by magnetizing the magnetic body layer 7 of the indicator 1 as described above, and the strength for change depends on strength of the magnetic field generated at this time. Thus, it is preferable to magnetize the magnetic body layer 7 by a magnetic field of about 30 to 50 % weaker than the magnetic field generated by the data eraser, for example.

The maximum strength required for irretrievably erasing and destroying data recorded in a recording medium depends on a condition such as a structure and a type of the medium. Generally, the older the type of the medium is, the lower the required strength is, an early type requiring about 120 kA/m (about 1500 oersted) and a recent type requiring about 320 kA/m (about 4000 oersted). Consequently, it is preferable to prepare several kinds of indicators having several strengths for change and to check in advance by experiments a maximum strength required for every structure and type of a recording medium to be processed so as to use an indicator having an appropriate strength of change depending on the medium.

As described above, the use of the indicators of the embodiments exerts an effect of enabling to check with human eyes that a recording medium is exposed to a magnetic filed of a predetermined strength and to confirm that data is erased.

## Claims

1. An indicator for confirming data erasure to be placed in a magnetic field with a recording medium in placing the recording medium in the magnetic field so as to erase data recorded in the medium, comprising a displaying part,
wherein the displaying part causes its displaying status to change upon being placed in a magnetic field of a predetermined strength or more.

2. The indicator as defined in claim 1,
the displaying status of the indicator changing in at least one of the following ways that:
(1) at least one of predetermined letter, figure, mark, pattern, and color is displayed in advance and the at least one of them is disappeared when the indicator is placed in the magnetic field of the predetermined strength or more;
(2) at least one of predetermined letter, figure, mark, pattern, and color appears when the indicator is placed in the magnetic field of the predetermined strength or more; and
(3) at least one of predetermined letter, figure, mark, pattern, and color is displayed in advance and the at least one of them changes.

3. The indicator as defined in claim 1,
wherein the displaying part comprises a magnetic body layer and a magnetic particle layer arranging therein magnetic particles and allowing the magnetic particles to freely move in at least some part of the magnetic particle layer,
so that arrangement of the magnetic particles being visible from outside.

4. The indicator as defined in claim 3,
the magnetic particle layer allowing the magnetic particles to freely move in a substantially entire area of the magnetic particle layer.

5. The indicator as defined in claim 1, further comprising a magnetic body layer and a transparent layer, so as to form a closed cavity covered with the magnetic body layer and the transparent layer,
the magnetic particles being encapsulated in the cavity and being movable freely in an entire area of the cavity.

6. The indicator as defined in claim 3,
the magnetic particle layer having a plurality of microcapsules,
the magnetic particles being encapsulated in each of the microcapsules, so as to freely move only in the each microcapsule.

7. The indicator as defined in claim 6,
the magnetic particle layer having a number of microcapsules dispersed in a resin.

8. The indicator as defined in claim 6,
the microcapsules encapsulating a liquid and the magnetic particles suspended in the liquid and reactable to the magnetic field.

9. The indicator as defined in claim 3,
the magnetic body layer having a particular part, so that a predetermined letter or graphic pattern is presented by the part when the particular part is magnetized.

10. The indicator as defined in claim 3,
the magnetic body layer having a magnetized particular part, so that a predetermined letter or graphic pattern is drawn by the magnetized part.

11. The indicator as defined in claim 10,
the magnetic body layer being magnetized by a magnetic field of about 30 to 50 % weaker than the magnetic field generated by the data eraser in erasing data.

12. The indicator as defined in claim 1,
being of a card-shape.

13. The indicator as defined in claim 1,
being of a tape-shape, and
comprising a plurality of displaying parts, the parts being adapted to be separated into every displaying part.

14. The indicator as defined in claim 1, further comprising a first surface and a second surface,
the first surface being for checking with human eyes, and
the second surface having an adhesive layer.

15. The indicator as defined in claim 1,
being adapted to change a display of the displaying part under the condition that the indicator is placed in a magnetic field of a maximum strength of 120kA/m or more.

16. A box for use in processing recording media,
being accompanied with the indicator for confirming data erasure as defined in claim 1 mounted on a surface of the box, and
being adapted to accommodate a plurality of recording media therein.

17. A method for erasing data, comprising the step of placing a recording medium and the indicator for confirming data erasure as defined in claim 1 in an attenuating alternating magnetic field whose peak value reduces as time passes.

18. The method as defined in claim 17, further comprising the steps of:
providing a data eraser comprising a containing part, a magnetic field generating part adapted to generate the attenuating alternating magnetic field within the containing part, and an outer casing for covering the containing part from outside; and
placing the recording medium and the indicator in the containing part.

19. The method as defined in claim 17, further comprising the step of placing a device incorporating a recording medium directly in the attenuating alternating magnetic field.

20. The method as defined in claim 19,
wherein the recording medium is a hard disk drive.

21. The method as defined in claim 17,
wherein the indicator is mounted on the recording medium in a visible way.

22. The method as defined in claim 17, further comprising the step of magnetizing a magnetic body layer of the indicator by a magnetic field of about 30 to 50 % weaker than the magnetic field generated by a data eraser before placing of the indicator in the magnetic field generated by the data eraser.
